# EUROPEAN PATENT APPLICATION

(11) **EP 2 219 339 A1**
(43) Date of publication of application: **18.08.2010**
(21) Application number: 08869505.1
(22) Date of filing: 05.12.2008
(51) Int. Cl.: H04L 29/06

(54) **A NEGOTIATION METHOD FOR NETWORK SERVICE AND A SYSTEM THEREOF**

(30) Priority: 27.12.2007 CN 200710304353
(71) Applicant: Huawei Technologies Co., Ltd., Longgang District, Shenzhen Guangdong 518129 (CN)
(72) Inventor: PAN, Yunbo, Shenzhen Guangdong 518129 (CN)
(74) Representative: Charles, Glyndwr
(86) International application number: PCT/CN2008/073355
(87) International publication number: WO 2009/086769

(57) **Abstract**

A method, system, terminal, and server for negotiating a network service are provided, which belong to the field of network access technology. The method includes: an AAA server for providing basic access (AAAn server) receives a network access identifier (NAI) from a terminal during an authentication process, where the NAI contains service identifier information of a service requested by the terminal. The AAAn server performs identity authentication on the terminal according to the NAI and information associated with the terminal stored in a database of the AAAn server. The AAAn server judges whether the terminal can obtain the requested service according to the service identifier information of the service requested by the terminal contained in the NAI after the terminal successfully passes the identity authentication. The system includes a terminal and an AAAn server. The technical solutions can simplify the negotiation process, and facilitate the network management and operation.

## Description

The application claims the benefit of priority to Chinese Patent Application No. 200710304353.0, filed on December 27, 2007, and entitled "METHOD AND SYSTEM FOR NEGOTIATING NETWORK SERVICE", which is incorporated herein by reference in its entirety.

### FIELD OF THE TECHNOLOGY

The present invention relates to the field of network access technology, and more particularly, to a method, system, terminal and server for negotiating a network service.

### BACKGROUND OF THE INVENTION

The rapid development of Internet technologies and data applications has widely promoted the fast development of the access authentication technology of the wireless network. In the field of the access authentication solution of the wireless network, the Extensible Authentication Protocol (EAP) is a commonly used authentication method.

During the EAP authentication, two keys are generated, namely, a Master Session Key (MSK) and an Extended Master Session Key (EMSK). The MSK is used for guaranteeing the security of an air interface, while the EMSK is used for providing the security insurance for subsequent services such as re-authentication, Handover Key (Hokey), and mobile Internet Protocol (IP).

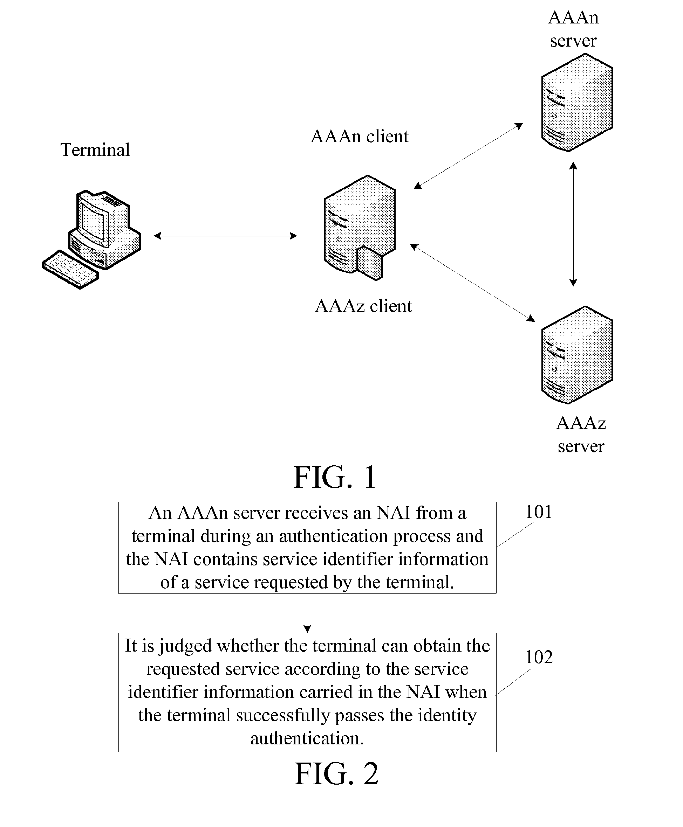

FIG. 1 is a schematic view of an authentication, negotiation, and authorization process of an EAP. An AAAn server is an authorization, account, and authentication (AAA) server for providing a basic access service, while an AAAz server is an AAA server providing other services except the basic access service. For example, the AAAn server is a server of China Mobile, while the AAAz server is a certain AAA server of a Service Provider (SP), who provides other services over a network of China Mobile.

The entire authentication, negotiation, and authorization process is as follows.

In S 1, an AAAn server performs network access authentication on a service supplicant, that is, a terminal, and the terminal generates an EMSK after completing the authentication process with the AAAn server.

In S2, after the network access authentication is finished, the terminal requests a service from an AAAz server.

In S3, the AAAz server requests a Usage Specific Root Key (USRK) for the service request from the AAAn server. The AAAn server generates a corresponding USRK, and transmits the USRK to the AAAz server. The AAAz server generates a subsequent subkey according to the USRK and performs authorization on the service requested by the terminal.

During the implementation of the present invention, the inventor found that the prior art has at least the following defects.

In the prior art, at first, the AAAn server performs authentication on the terminal, and after the authentication is finished, the negotiation and authorization of a service are performed, and the negotiation and authorization process is requested and interacted by the AAAz server to the AAAn server, so that the time delay of the entire negotiation and authorization is much longer.

Furthermore, an EMSK is generated during an authentication step. In practical operations, for the purpose of security, the EMSK is deleted after the authentication is finished. In a subsequent negotiation and authorization step, the EMSK cannot be acquired if the EMSK is still needed.

### SUMMARY OF THE INVENTION

In order to simplify the negotiation and authorization process and shorten the delay, the embodiments of the present invention are directed to a method, system, terminal and server for negotiating a network service. The detailed technical solutions are described as follows.

In an embodiment of the present invention, a method for negotiating a network service includes the following steps.

An AAA server for providing basic access (AAAn server) receives a network access identifier (NAI) from a terminal during an authentication process, where the NAI contains service identifier information of a service requested by the terminal.

The AAAn server performs identity authentication on the terminal according to the NAI and information associated with the terminal stored in a database of the AAAn server, and judges whether the terminal can obtain the requested service according to the service identifier information of the service requested by the terminal contained in the NAI after the terminal successfully passes the identity authentication.

In an embodiment of the present invention, a system for negotiating a network service includes a terminal and an AAAn server.

The terminal is configured to support authentication with the AAAn server, and send an NAI to the AAAn server during the authentication process. The NAI contains service identifier information of a service requested by the terminal.

The AAAn server is configured to receive the NAI from the terminal during the authentication process, perform identity authentication on the terminal according to the NAI and information associated with the terminal stored in a database of the AAAn server, and judge whether the terminal can obtain the requested service according to the service identifier information of the service requested by the terminal contained in the NAI after the terminal successfully passes the identity authentication.

In an embodiment of the present invention, a terminal includes an authentication module, an NAI generating module, and an NAI sending module.

The authentication module is configured to support authentication with an AAAn server.

The NAI generating module is configured to enable the NAI to contain service identifier information of a requested service.

The NAI sending module is configured to send the NAI containing the service identifier information of the service requested by the terminal to the AAAn server during the authentication process.

In an embodiment of the present invention, a server is an AAAn server and includes a receiving module, an authentication module, and a judging module.

The receiving module is configured to receive an NAI from a terminal during an authentication process. The NAI contains service identifier information of a service requested by the terminal.

The authentication module is configured to perform identity authentication on the terminal according to the NAI and information associated with the terminal stored in a database of the AAAn server.

The judging module is configured to judge whether the terminal can obtain the requested service according to the service identifier information of the service requested by the terminal contained in the NAI after the terminal successfully passes the identity authentication.

In the technical solutions of embodiments of the present invention, by extending the service identifier information in the NAI, the negotiation with the AAAn server is performed according to the extended service identifier information in the NAI during the authentication process. Hence, the entire negotiation process is completed during the authentication process, without necessarily starting negotiation after the authentication is completed. Furthermore, the negotiation process is completed during the authentication process, which avoids the circumstance in the prior art that, due to deleting an EMSK after the authentication is finished, the EMSK cannot be acquired in the subsequent negotiation and authorization process.

### BRIEF DESCRIPTION OF THE DRAWINGS

FIG. 1 is a schematic view of an authorization, account, and authentication process of an EAP in the prior art;
FIG. 2 is a flow chart of a method for negotiating a network service according to a first embodiment of the present invention;
FIG. 3 is a flow chart of a method for negotiating a Hokey service according to a second embodiment of the present invention; and
FIG. 4 is a structural view of a system for negotiating a network service according to a third embodiment of the present invention.

### DETAILED DESCRIPTION OF THE EMBODIMENTS

In order to make the purpose, technology solutions, and advantages of the present invention more comprehensible, the detailed description of the present invention are further set forth hereinafter in detail with reference to the accompanying drawings.

### Embodiment 1

In this embodiment, a method for negotiating a network service is provided, which simplifies a negotiation process by carrying service identifier information in an NAI. As shown in FIG. 2, the method includes the following steps.

In step 101, during an authentication process between an AAAn server and a terminal, the AAAn server receives an EAP-Response message or an Identity message from the terminal. The EAP-Response message or the Identity message carries an NAI of the terminal, and the NAI carries identification information of a service requested by the terminal.

The service identifier information may be carried in a type of NAI, such as Permanent NAI. Thus, regardless of the required services, information may be added in the Permanent NAI, and the added information may act as the service identifier information; and the Permanent NAI remains unchanged, which is a user identification (may be a user name, a MAC address, or an IP address, and so on), and the service identifier information corresponds to a service request. Hence, the NAI according to this embodiment may identify a large number of different types of service requests. A detailed identification method is as follows.
a: The NAI is simply extended, and an extension may be added in the user identification of the NAI. For example, Username.hokey.rea represents that a user with the NAI as Username needs hokey (Handover Key) and rea (reauthentication) services. Suffixes may be added, after "realm", into the NAI, such as Username@realm.hokey.rea. During the extending operation, locations of the suffixes and symbols between the suffixes may be randomly specified, as long as an agreement is made in protocol and a server can read the extended suffixes according to the predefined agreement.
b: An original NAI is converted according to a specified algorithm. For example, new NAI=prf (NAI, Service Data) and new NAI=pprf (NAI, Service Data), which represent any algorithm for adding service request information to the NAI.

In step 102, the AAAn server performs identity authentication on the terminal according to the user identification in the received NAI carrying the service identifier information sent by the terminal and information (that is, Profile) associated with the terminal, the information (that is, Profile) associated with the terminal is stored in a database of a local AAAn server; obtains corresponding service identifier information according to the NAI carrying the service identifier information after the terminal successfully passes the identity authentication; and obtains the service requested by the terminal according to the service identifier information, and judges whether the terminal can obtain the requested service. The process of judging whether the terminal can obtain the service is as follows.

In step 102a, according to each service requested by the terminal, the AAAn server searches whether a corresponding AAAz server that can provide the service for the terminal exists.

If the AAAz server that can provide the service exists, the process proceeds to step 102b.

If the AAAz server that can provide the service does not exist, the terminal cannot obtain the service and the terminal receives a service negotiation failure indication.

In step 102b, it is judged whether the AAAn server establishes a trust relationship with the AAAz server.

It is judged whether the trust relationship is implemented by authenticating the identity of a counterpart and determining whether the counterpart has a Service Level Agreement (SLA) with the current server. If the counterpart has a Service Level Agreement with the current server, both parties negotiate about a security parameter and establish a security association (SA). The established SA may be repetitively used within a certain range for a certain time period. If the counterpart has no Service Level Agreement with the current server, the trust relationship cannot be established.

If the AAAz server that can provide the service exists and the trust relationship is established between the AAAn server and the AAAz server, the AAAn server and the terminal generate a corresponding USRK through an EMSK (if no failure indication is received, the terminal considers by default that the service negotiation is successful). The AAAn server transmits the USRK to the AAAz server. The terminal and the AAAz server generate a subsequent subkey according to the USRK, so as to guarantee subsequent service authorization.

If the AAAz server that can provide the service does not exist, no matter whether the trust relationship is established between the AAAn server and the AAAz server, the terminal cannot obtain the service. The AAAn server or Authenticator (AAAz client or AAAn client, or the proxy of the AAAz client, or the proxy of AAAn client, where the proxy of the AAAn client and the proxy of the AAAz client are logically unified) informs the terminal, and the terminal receives a service negotiation failure indication.

If the negotiation is successful, the AAAn server and the terminal generate the corresponding USRK, and transmit the USRK to the AAAz server. The AAAz server and the terminal generate the subsequent subkey according to the USRK to perform authorization for the service requested by the terminal.

In the embodiment of the present invention, more services can be borne by carrying the service identifier information in the NAI, so as to simplify the service negotiation, and facilitate the management and operation. In the embodiment of the present invention, the NAI is extended by adding suffixes for identifying the service information in the NAI, and a variety of EAP negotiation methods can be made compatible independent of the constraints on the negotiation and authorization caused by the SLA and authentication process.

### Embodiment 2

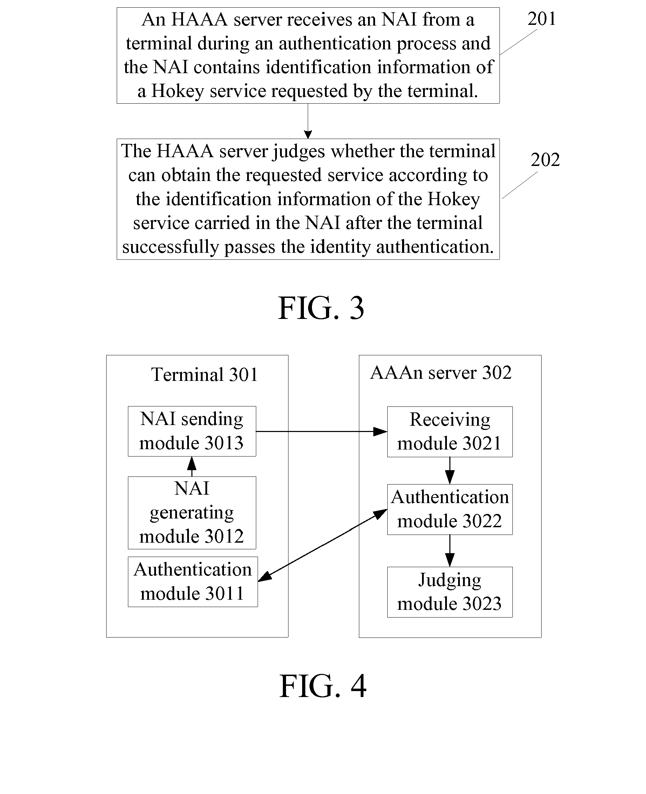

By taking Hokey service as an example in this embodiment, a method for negotiating a network service is introduced in detail. As shown in FIG. 3, the negotiation method includes the following steps.

In step 201, in an authentication process between a Home Authorization Account Authentication (HAAA) server (equivalent to an AAAn server) and a terminal, the HAAA server receives an EAP-Response message or an Identity message from the terminal. The EAP-Response message or the Identity message carries an NAI of the terminal, and the NAI carries identification information of a service requested by the terminal.

When the terminal performs Bootstrapping or initially enters a certain visited realm, if the terminal has a Hokey service request, an NAI containing Hokey service identifier information such as Username.Hokey, is carried in the EAP-Response message or the Identity message in an EAP authentication process, where the Hokey is the Hokey service identifier information. The Hokey service identifier information corresponds to the Hokey service request, so that the EAP-Response message or the Identity message can identify the Hokey service request of the terminal.

In step 202, the HAAA server performs identity authentication on the terminal according to the user identity identification in the NAI sent by the terminal and information (that is, Profile) associated with the terminal, the information associated with the terminal is stored in a database of the HAAA server; obtains the corresponding service identifier information in the NAI carrying the service identifier information, that is, the Hokey, after the terminal successfully passes the identity authentication; and obtains the service requested by the terminal according to the service identifier information, that is, the Hokey service, and judges whether the terminal can obtain the Hokey service (generally, the HAAA server surely responds to any Hokey request from the terminal).

The process of judging whether the terminal can obtain the Hokey service is as follows.

In step 202a, the HAAA server needs to determine whether the visited realm of the terminal supports the Hokey service.

If the visited realm supports the Hokey service, the process proceeds to step 202b.

If the visited realm does not support the Hokey service, the terminal cannot obtain the Hokey service, and the terminal receives a Hokey service negotiation failure indication.

In step 202b, it is judged whether a trust relationship needs to be established between the HAAA server and a Hokey server (equivalent to an AAAz server) of the visited realm or, between the HAAA server and a root server providing the Hokey service.

If the visited realm supports the Hokey service, and the trust relationship needs to be established between the HAAA server and the Hokey server of the visited realm or, between the HAAA server and a root server providing the Hokey service, the HAAA server and the terminal generate a corresponding HRK through an EMSK. The HAAA server transmits the HRK to the Hokey server. The terminal and the Hokey server generate a subsequent subkey, and the Hokey server performs authorization of the service requested by the terminal according to the subkey.

If the visited realm does not support the Hokey service, no matter whether the trust relationship is established between the HAAA server and the Hokey server of the visited realm or, between the HAAA server and the root server providing the Hokey service, the terminal cannot obtain the Hokey service. The HAAA server or Authenticator (a proxy of HAAA client) informs the terminal, and the terminal receives a service negotiation failure indication. The HAAA server notifies the terminal through the message that the current NAI is invalid (that is, the Hokey service is not provided), and requires the terminal to adopt a new NAI.

In the embodiment of the present invention, more services can be borne by carrying the Hokey service identifier information in the NAI, so as to simplify the terminal, facilitate the management and operation, and make a variety of EAP negotiation methods become compatible.

### Embodiment 3

In the embodiment of the present invention, a system for negotiating a network service is provided. As shown in FIG. 4, the system for negotiating a network service includes a terminal 301 and an AAAn server 302 for providing basic access.

The terminal 301 is configured to support authentication with the AAAn server, and send an NAI to the AAAn server during the authentication process. The NAI contains service identifier information of a service requested by the terminal.

The AAAn server 302 is configured to receive the NAI from the terminal during the authentication process, perform identity authentication on the terminal according to the NAI and information associated with the terminal, the information associated with the terminal is stored in a database of the AAAn server, and judge whether the terminal can obtain the requested service according to the service identifier information of the service requested by the terminal after the terminal successfully passes the identity authentication, the service identifier information of the service requested by the terminal is carried in the NAI.

The terminal 301 includes an authentication module 3011, an NAI generating module 3012, and an NAI sending module 3013.

The authentication module 3011 is configured to support the authentication with the AAAn server.

The NAI generating module 3012 is configured to enable the NAI to contain the service identifier information of the requested service.

The NAI sending module 3013 is configured to send the NAI containing the service identifier information of the service requested by the terminal to the AAAn server during the authentication process.

As a preferable solution, the NAI generating module is an extending module.

The extending module is configured to extend the NAI through adding suffix information after the rear part of the NAI. The suffix information acts as the service identifier information.

As another preferable solution, the NAI generating module is a converting module.

The converting module is configured to convert the NAI according to an algorithm to enable the converted NAI to contain the service identifier information.

The AAAn server 302 includes a receiving module 3021, an authentication module 3022, and a judging module 3023.

The receiving module 3021 is configured to receive the NAI from the terminal during the authentication process. The NAI carries the service identifier information of the service requested by the terminal.

The authentication module 3022 is configured to perform the identity authentication on the terminal according to the NAI and the information associated with the terminal, the information associated with the terminal is stored in the database of the AAAn server.

The judging module 3023 is configured to judge whether the terminal can obtain the requested service according to the service identifier information of the service requested by the terminal carried in the NAI after the terminal successfully passes the identity authentication.

The judging module includes a searching unit and a service acquiring unit.

The searching unit is configured to obtain the service requested by the terminal according to the service identifier information, and search whether another authorization, account, and authentication server (AAAz server) providing the requested service for the terminal exists.

The service acquiring unit is configured to judge that the terminal can obtain the requested service when the searched module is said another AAAz server providing the requested service for the terminal and the AAAn server establishes a trust relationship with said another AAAz server.

In the technical solutions of the embodiments of the present invention, by carrying the service identifier information in the NAI, the negotiation with the AAAn server is performed according to the service identifier information contained in the NAI during the authentication process. Hence, the entire negotiation process is completed during the authentication process, without necessarily starting negotiation after the authentication is completed. Furthermore, the negotiation process is completed during the authentication process, which avoids the circumstance in the prior art that, due to deleting an EMSK after the authentication is finished, the EMSK cannot be acquired in the subsequent negotiation and authorization process. Additionally, the contained service identifier information can specify various different types of services respectively, so that more services can be borne.

The above embodiments are merely some exemplary embodiments of the present invention, but not intended to limit the present invention. It is apparent that those skilled in the art can make various modifications and variations to the present invention without departing from the spirit and scope of the present invention.

## Claims

1. A method for negotiating a network service, comprising:
receiving, by an authorization, account, and authentication server for providing basic access, AAAn server, a network access identifier (NAI) from a terminal during an authentication process, wherein the NAI carries service identifier information of a service requested by the terminal; and
performing, by the AAAn server, identity authentication on the terminal according to the NAI and information associated with the terminal, where the information associated with the terminal is stored in a database of the AAAn server, and
judging, by the AAAn server, whether the terminal is capable of obtaining the requested service according to the service identifier information of the service requested by the terminal contained in the NAI after the terminal successfully passes the identity authentication.

2. The method for negotiating a network service according to claim 1, wherein the judging whether the terminal is capable of obtaining the requested service according to the service identifier information of the service requested by the terminal contained in the NAI further comprises:
obtaining the service requested by the terminal according to the service identifier information, and searching whether another authorization, account, and authentication, AAA, server providing the requested service for the terminal exists, wherein if the another AAA server exits, and the AAAn server has established a trust relationship with the another AAA server, the terminal is capable of obtaining the requested service.

3. The method for negotiating a network service according to claim 1, wherein enabling the NAI to contain the service identifier information of the service requested by the terminal further comprises:
extending the NAI through adding suffix information after the rear part of the NAI, wherein the suffix information acts as the service identifier information.

4. The method for negotiating a network service according to claim 1, wherein carrying the service identifier information of the service requested by the terminal in the NAI, comprises:
converting the NAI according to an algorithm to enable the converted NAI to contain the service identifier information.

5. A system for negotiating a network service, comprising:
a terminal, configured to support authentication with an authorization, account, and authentication server for providing basic access, AAAn server, and send a network access identifier, NAI, to the AAAn server during the authentication process, wherein the NAI contains service identifier information of a service requested by the terminal; and
an AAAn server, configured to receive the NAI from the terminal during the authentication process, perform identity authentication on the terminal according to the NAI and information associated with the terminal stored in a database of the AAAn server, and judge whether the terminal is capable of obtaining the requested service according to the service identifier information of the service requested by the terminal contained in the NAI after the terminal successfully passes the identity authentication.

6. The system for negotiating a network service according to claim 1, wherein the AAAn server comprises:
a receiving module, configured to receive the NAI from the terminal during the authentication process, wherein the NAI carries the service identifier information of the service requested by the terminal;
an authentication module, configured to perform the identity authentication on the terminal according to the NAI and the information associated with the terminal stored in the database of the AAAn server; and
a judging module, configured to judge whether the terminal is capable of obtaining the requested service according to the service identifier information of the service requested by the terminal contained in the NAI after the terminal successfully passes the identity authentication.

7. The system for negotiating a network service according to claim 6, wherein the judging module comprises:
a searching unit, configured to obtain the service requested by the terminal according to the service identifier information, and search whether another authorization, account, and authentication, AAA, server providing the requested service for the terminal exists; and
a service acquiring unit, configured to judge that the terminal is capable of obtaining the requested service when the searched module is another AAA server providing the requested service for the terminal and the AAAn server establishes a trust relationship with the another AAA server.

8. The system for negotiating a network service according to claim 1, wherein the terminal comprises:
an authentication module, configured to support authentication with the AAAn server;
an NAI generating module, configured to enable the NAI to contain the service identifier information of the requested service; and
an NAI sending module, configured to send the NAI containing the service identifier information of the service requested by the terminal to the AAAn server during the authentication process.

9. The system for negotiating a network service according to claim 8, wherein the NAI generating module is:
an extending module, configured to extend the NAI through adding suffix information after the rear part of the NAI, wherein the suffix information acts as the service identifier information.

10. The system for negotiating a network service according to claim 8, wherein the NAI generating module is:
a converting module, configured to convert the NAI according to an algorithm to enable the converted NAI to contain the service identifier information.

11. A terminal, comprising:
an authentication module, configured to support authentication with an authorization, account, and authentication server for providing basic access (AAAn server);
a network access identifier, NAI, generating module, configured to enable the NAI to contain service identifier information of a requested service; and
an NAI sending module, configured to send the NAI containing the service identifier information of the service requested by the terminal to the AAAn server during the authentication process.

12. A server, wherein the server is an authorization, account, and authentication server for providing basic access, AAAn server, comprising:
a receiving module, configured to receive a network access identifier, NAI, from a terminal during an authentication process, wherein the NAI contains service identifier information of a service requested by the terminal;
an authentication module, configured to perform identity authentication on the terminal according to the NAI and information associated with the terminal stored in a database of the AAAn server; and
a judging module, configured to judge whether the terminal is capable of obtaining the requested service according to the service identifier information of the service requested by the terminal contained in the NAI after the terminal successfully passes the identity authentication.
